# EUROPEAN PATENT SPECIFICATION

(11) **EP 0 558 223 B1**
(45) Date of publication and mention of the grant of the patent: **30.09.1998**
(21) Application number: 93301111.6
(22) Date of filing: 16.02.1993
(51) Int. Cl.: G06F 3/033

(54) **Window management system in a computer workstation**
Fensterverwaltungssystem in einem Computerterminal
Système de gestion de fenêtres dans une station de travail d'ordinateur

(30) Priority: 27.02.1992 JP 40859/92
(43) Date of publication of application: 01.09.1993
(73) Proprietor: International Business Machines Corporation, Armonk, N.Y. 10504 (US)
(72) Inventor: Kuse, Kazushi, Fujisawa-shi,Kanagawa-ken (JP); Mitsui, Kinichi, Asaka-shi, Saitama-ken (JP); Ohira, Tsuyoshi, Urawa-shi, Saitama-ken (JP); Javey, Shahram, Toronto, Ontario M5M 3V7 (CA)
(74) Representative: Burt, Roger James, Dr.

(56) References cited:
- EP-A- 0 287 858
- SOFTWARE PRACTICE & EXPERIENCE vol. 19, no. 6, June 1989, CHICHESTER GB pages 515 - 528 ROWE ET AL. 'A visual shell interface to a database'
- PATENT ABSTRACTS OF JAPAN vol. 16, no. 276 (P-1374)19 June 1992 & JP-A-4 070 926 ( RICOH CO LTD ) 5 March 1992
- PATENT ABSTRACTS OF JAPAN vol. 14, no. 138 (P-1022)15 March 1990 & JP-A-2 005 092 ( HITACHI LTD ) 9 January 1990

## Description

The present invention relates to a computer workstation having a window management system, whereby relations between a plurality of windows can be easily altered, and the user can easily appreciate such relations.

Application programs using a window system, such as browsers for databases and for language processors, generally consist of a plurality of windows (including the sub-windows generated in the windows). The relations between these windows are usually fixed beforehand.

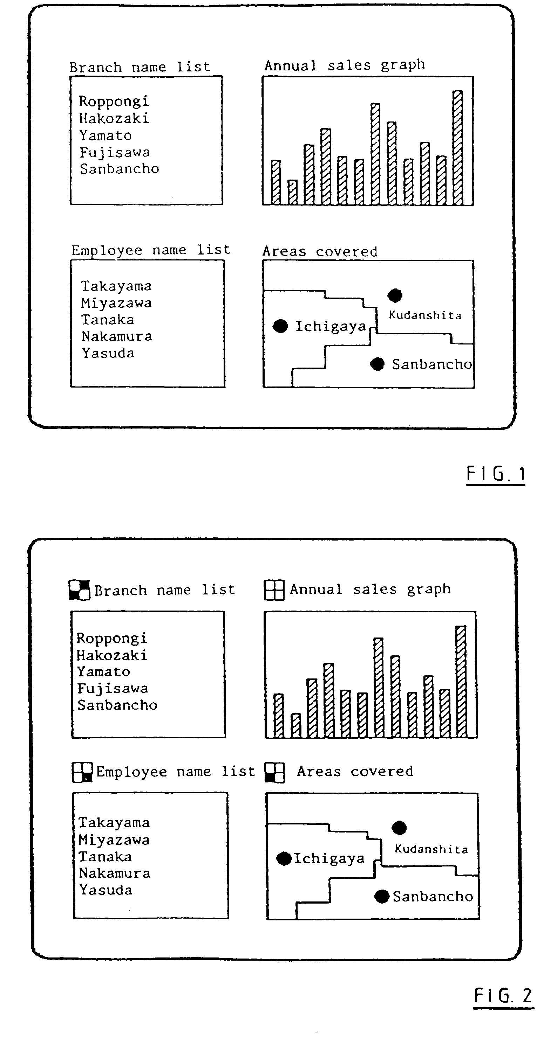

For instance, the application program shown in Figure 1 consists of four windows. The windows are respectively displaying a list, a list, a graph and a diagram. In this example, the branch names of an automobile sales company are displayed in the first window, and the employee names belonging to each branch are displayed in the second list window. The graph window displays the annual sales for each branch or each employee on a monthly basis in a graph. The diagram window displays the areas covered by each branch or each employee on a map.

The relations between the windows are fixed in the conventional approach, so that the following operations are typically performed, (see Figure 1).
i) If one branch is selected from the branch name list, the information on that branch is automatically displayed on the remaining three windows.
ii) If one employee is selected from the employee name list, the annual sales graph and the areas for that employee are automatically displayed.

In this example, the upper-right annual sales graph window can display sales both by branch and by employee. Also, the area window can similarly display the areas covered by a branch and those covered by an employee.

In such a conventional technique, by simply selecting a data item, the related windows can automatically be operated, and thus operation is simple. However, since the directions for data movement between windows and the various destination windows (such as list, graph, diagram, text) are previously fixed, the degree of flexibility is small. For instance, operations such as changing the display of only the branch names and the sales (without linking this with the graph window) or carrying the data from the graph window in the list cannot be performed.

An example of such conventional window management is described in detail, for instance in Chapter 4 "Source Code Browse" of Reference Manual, Rel. 2 of "Objectworks/C++," Fuji-Xerox Information Systems, Co., Ltd.

To avoid the above stated inconvenience of the conventional technique, it is also possible for the relations between windows to be specified for each operation without being preset. To be specific, first specify (click) data in a window in which data is specified (source window). Then, specify a window in which the attributes of the specified data are to be displayed (destination window). For instance, click the take-in button of the destination window. Then, determine the attribute desired to be displayed in the destination by selecting a view. If this is all right with the current view, continue the execution. In this way, the desired attribute data of a data instance clicked in the source is displayed in a desired window with a desired view.

The following are examples of use in which the user specifies the source and destination of data for each operation (see Figure 1).
i) When one branch is selected from the branch name list and a take-in operation is performed in the graph window, the annual sales for the branch are displayed.
ii) When one branch is selected from the branch name list and a take-in operation is performed in the diagram window, the areas covered by the branch are displayed.
iii) When one employee is selected from the employee name list and a take-in operation is performed in the graph window, the annual sales for the employee are displayed.
iv) When one employee is selected from the employee name list and a take-in operation is performed in the graph window, the areas covered by the employee are displayed.

In this case, the data destination can be flexibly switched. However, in a continuous operation such as sequentially displaying the sales graph and area diagram for each branch, it is necessary to perform a take-in operation in the graph and diagram windows each time the branch name is changed, and thus the number of operations will be at least three times that of the former method.

In "A Visual Shell Interface to a Database", p515-528 in Software Practice and Experience, 19(1989) June, no 6, L Rowe et al. describe a visual command language for a database which displays links between different windows.

One other related prior reference is Published Unexamined Japanese Patent Application No. 273947/1988. This prior reference discloses that, when a data instance in a card-like window is pointed to, another window is automatically generated and the predetermined attributes of the data instance are automatically displayed in this window. However, this reference contains no description of setting the relations between windows by instructions to a graphical window, or displaying the relations through graphical objects.

According the invention provides a computer workstation including display means and a window management system comprising:
means for displaying a plurality of windows on said display means;
means for specifying the relations between said displayed windows; and
means for displaying graphical objects representing the specified relations between said windows on the display means,
and characterised in that one of said graphical objects is displayed in or adjacent each of said windows, wherein each of said graphical objects comprises a plurality of button representations corresponding respectively to one each of said plurality of windows.

Thus a user can freely change the relations between windows and easily understand those relations.

In a preferred embodiment, the computer workstation further comprises:
means for operating on said graphical objects in order to specify the relations between said windows on the display means; and
means for changing the display mode of said graphical objects according to the specified relations between said windows.

Thus graphical objects for setting the relations between a plurality of windows are displayed. The relations can then be set by operating on the graphical objects, for instance, mouse clicking, and this setting can be represented by a change in the display mode of the graphical objects.

In a preferred embodiment, said plurality of button representations have the same positional arrangement as said plurality of windows. One of said button representations is operated to specify a relationship between a first window, being the window in or adjacent to which the graphical object containing said one button representation is located, and a second window, being the window having the same position within the positional arrangement of said plurality of windows as said one button representation has within the plurality of button representations.

It is further preferred that the computer workstation further comprises a database system having:
means for storing information;
means for setting views for controlling how said information is to be displayed within any particular window;
means for displaying said information within said plurality of windows according to said views; and
means for operating on said graphical objects to set up a master-slave relation between said two windows, wherein following selection in the master window of particular data from the stored information, the slave window is correspondingly changed to display a view of the selected data.

In a specific example, for instance, as shown in Figure 2, the same number of buttons as there are windows are arranged as the windows are arranged, and are provided for each window. In the case of Figure 2, four buttons are arranged in the shape of " 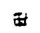 ", and one set thereof is provided for each window. One button is reversely displayed by selecting it with a mouse or corresponding key. Each button corresponds to an individual window. At first, all the buttons are unselected, and they are all white. In this state, none of the windows are related, and for data movement, source and destination are specified for each operation. To perform the same operation a plurality of times, buttons corresponding to destination windows are selected from the " 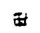 "-like four buttons in a window from which data is desired to be taken out. Thereafter, the relations between the source and destination windows are maintained until those buttons are selected again and released. Merely by selecting data within a window, the related windows are linked with it. For instance, to relate the branch name list to the employee name list and to annual sales, the employee name list to the areas, and the areas to the employee name list, the respective " "-like buttons are selected as shown in Figure 2.

Preferably said plurality of windows are displayed in a fixed arrangement without overlapping each other, although the technique can also be applied with other configurations.

Thus relations between windows can be set up for fixed operations as is done conventionally, whereas relations can be performed operation by operation if more flexible operations are required, thereby providing for a wide range of demands by users. Graphical objects for setting the relations between a plurality of windows are displayed, the relations can be set by operation on the graphical objects, for instance, by mouse click, and the setting can be represented by changes in the display mode of the graphical objects. Accordingly, the relations between sub-windows are set for fixed operations, as is conventional, and relations are performed for each operation if more flexible operations are required, whereby a wide range of demands by users can be fulfilled.

The invention also provides a method for managing windows in a computer workstation including display means, the method having the steps of:
displaying a plurality of windows on said display means;
specifying the relations between said displayed windows; and
displaying graphical objects representing the specified relations between said windows on the display means,
and characterised in that one of said graphical objects is displayed in or adjacent each of said windows, wherein each of said graphical objects comprises a plurality of button representations corresponding respectively to one each of said plurality of windows.

Preferably this method further has the steps of:
operating on said graphical objects in order to specify the relations between said windows on the display means; and
changing the display mode of said graphical objects according to the specified relations between said windows.

An embodiment of the invention will now be described by way of example with reference to the following drawings:
Figure 1 shows an example screen display of an application program having four windows;
Figure 2 shows an example screen display analogous to that of Figure 1 but for a computer workstation in accordance with the present invention;
Figure 3 is a simple block diagram of a computer workstation in accordance with the present invention;
Figure 4 is a block diagram further illustrating the computer workstation of Figure 3;
Figure 5 illustrates an example of the management table of the window managing system of Figure 4;
Figure 6 is a flowchart illustrating user interaction with the workstation ot Figure 3;
Figure 7 is a flowchart illustrating manual take-out and take-in processing in the workstation of Figure 3;
Figure 8 is a flowchart further illustrating the operation of the workstation of Figure 3;
Figure 9 is a flowchart further illustrating automatic window processing in the workstation of Figure 3;

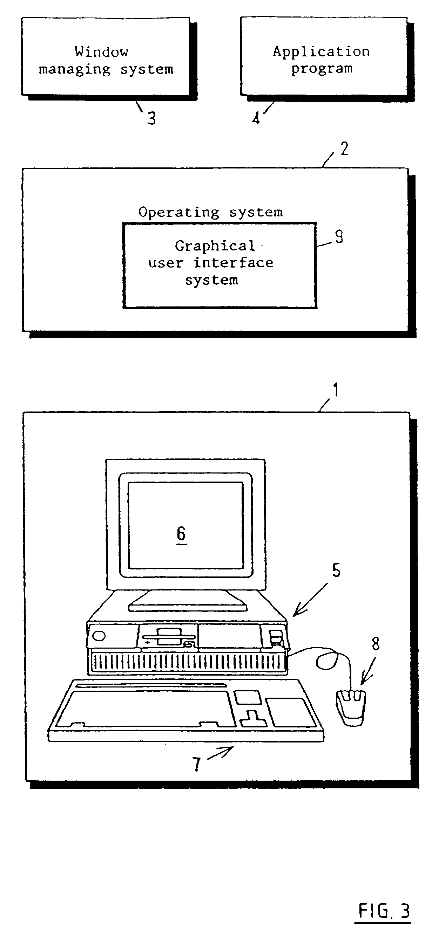

Figure 3 generally shows a typical computer system. In the figure, the system consists of workstation 1, operating system 2, window managing system 3 and application program 4. Workstation 1 is, for example, a RISC System/6OO0 computer (RISC System/60O0 is a trademark of IBM Corp), and consists of processor 5, display device 6, keyboard 7, mouse 8 etc. Operating system 2 is, for example, the AIX/6000 operating system (AIX/6000 is a trademark of IBM Corp.). The operating system 2 includes graphical user interface system 9, which manages the interaction between display device 6 and a user. The user interface system 9 is, for instance, OSF/Motif of Open System Foundation. The user interface system 9 also manages the information of the mouse cursor (pointer) controlled by a mouse.

Application program 4 is, for instance, a browser of a database or a source code browser of a program. Application program 4 performs generation of windows and setting of window views, namely, which data attributes to display, and supplies display data to user interface system 9 for displaying windows and data. For instance, in the example of Figure 2, four windows are formed, and in one each of these, a view of the branch name list, a view of annual sales for branch, a view of the employee name list of branch, and a view of the area diagram are set up.

To change the view of a window, the button for "list", "graph", "diagram", or "text" (not shown) for the window is clicked. For instance, if a particular view of the list type is desired to be selected, the "list" button is clicked. Whereupon, the names of various views of the list type are displayed in a pop-up menu, and a choice is made among them by clicking. Similarly, clicking the "graph" button allows selection of a view of the graph type, and clicking "diagram" or "text" button allows selection of a view of the corresponding type.

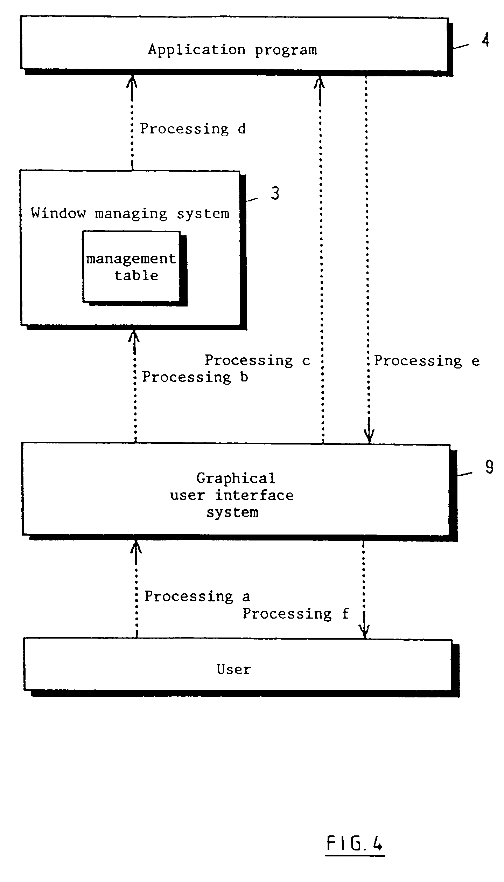

Figure 4 further describes the configuration of the window managing system in Figure 3. Window managing system 3 is located between application program 4 and user interface system 9. In window managing system 3, there is a management table used for automatic control of windows. A user uses application program 4 through user interface system 9. Processing "a" from the user represents clicking by mouse or character input. Input operations not related to the window managing system 3 are directly passed to application program 4 (processing "c"). Those related to window managing system 3 first pass through window managing system 3 and their processing is transferred to application program 4 (processing "b", "d"). At this point, processing is performed using the management table. The output from application program 4 is directly passed to user interface system 9 (processing "e").

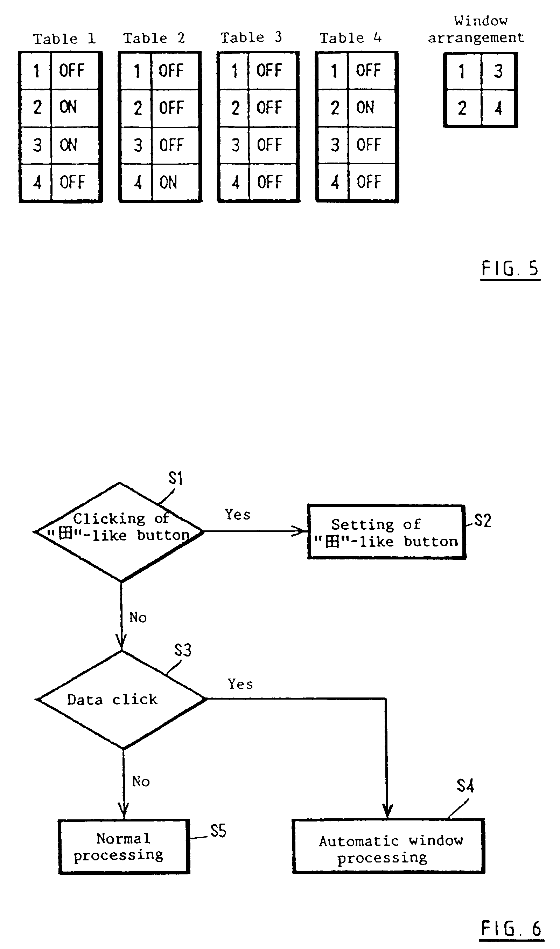

Figure 5 shows an example of the management table in window managing system 3. Figure 5 also includes a window arrangement diagram, which shows correspondence between the window numbers within the management table and the windows. As many tables as there are sub-windows used in application program 4 are prepared. In this example, the number of sub-windows is 4. The number of items in each table is also made equal to the number of sub-windows. One item corresponds to each sub-window. Each item has "on" or "off" as a value. "On" represents that there is a relation between windows, and "off" represents that there is no relation. Figure 5 shows the management table for the example of Figure 2. For instance, Table 1 shows the setting states of the " 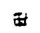 "-like buttons of the upper-left sub-window, in which the small buttons corresponding to the lower-left (item 2) and upper-right (item 3) sub-windows are set to "on" (relations exist).

Figure 6 shows an outline of the processing in window management system 3. First, when the user processing performed through user interface system 9 comprises clicking of a " 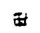 "-like button, the setting process of the " 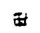 "-like button is executed (S1, S2). When it is clicking of data on a sub-window, automatic window processing is performed (S3, S4). If the user processing is not clicking of a " 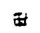 "-like button or clicking of data, other processing is performed (S5). This other processing includes processing corresponding to input from a keyboard or the like, menu operations or clicking of a button other than the " 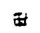 "-like buttons, and also includes the respective specification of source and destination.

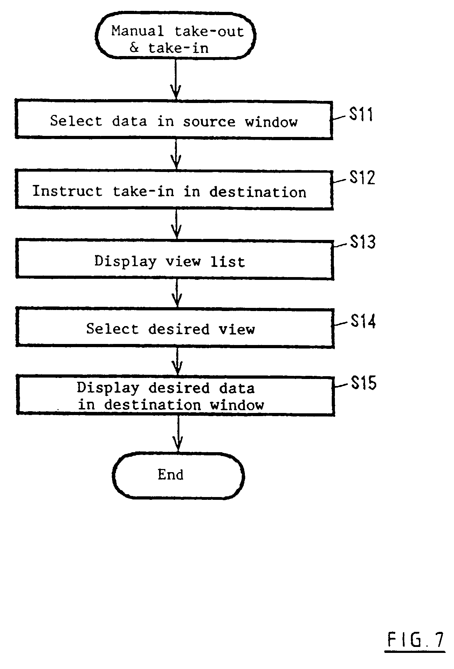

First, out of the other processing, the respective specification of source and destination will be described with reference to Figure 7. First, selection is made by clicking data in a source window. For instance, "Hakozaki" in the branch name list window in Figure 2 is specified (S11). In addition, it is assumed that the branch name list window has not yet been related to any other window at this point. If it is related, the related data is automatically displayed in the related window. Then the take-in button (not shown) of this window is clicked to set a destination window (S12). Thereafter, the view selection button (not shown) of the take-in data is clicked to cause the list of the take-in data views to be displayed in a pop-up menu, thereby allowing the user to select a view (S13, S14) (there are selection buttons for list, graph, diagram, and text views). The user specified data is then displayed in the destination window (S15). For instance, if it is desired to display a list of big customers of this branch in the lower-left window (the employee name list is now displayed), the big customer data item is selected from the pop-up menu. The big customer list of the "Hakozaki" branch is displayed in the lower-left window.

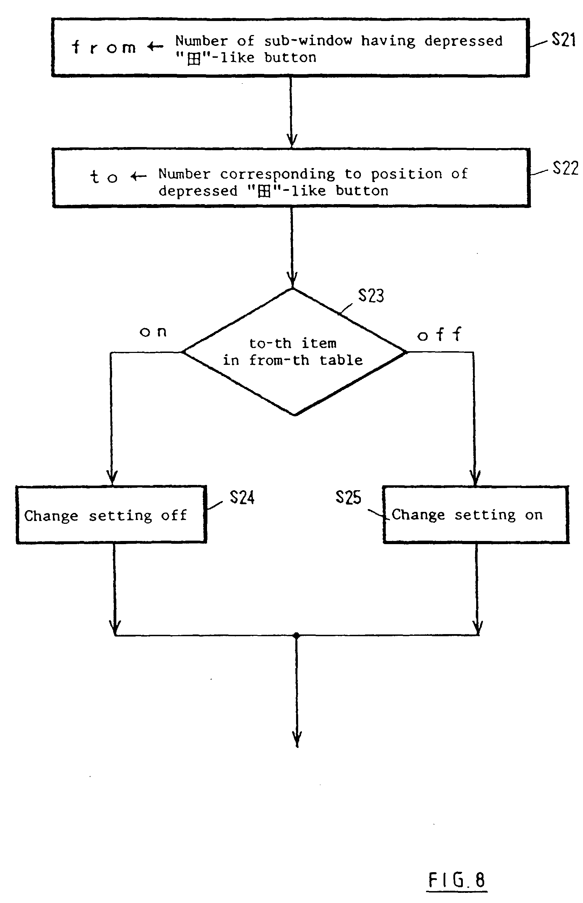

The " 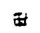 "-like button setting process will now be described with reference to Figure 8. First, the number of the window at which the depressed " 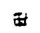 "-like button is placed is set in a "from" register (S21). The sub-window number corresponding to the depressed one out of the four small buttons of the " 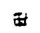 "-like button is stored in a "to" register (S22). And, referring to the values of the "from" and "to" registers, the "to"-th item value in the "from"-th table is reversed. That is, if the item value is "on", it is reversed to "off", and reversed to "on" if it is "off" (S23, S24, S25). For instance, in Figure 2, since the upper-right and lower-left buttons of the " 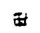 "-like button of the branch name list are highlighted, the destination windows having the branch name list window as a source window are the upper-right annual sales graph window and the lower-left employee name list window. And, in this state, if the upper-right button of the branch name list window is clicked, the highlight is turned off. That is, the relation is reset. On the other hand, when the lower-right button of the " 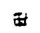 "-like buttons of the branch name list window is clicked, this button is highlighted to perform a relation.

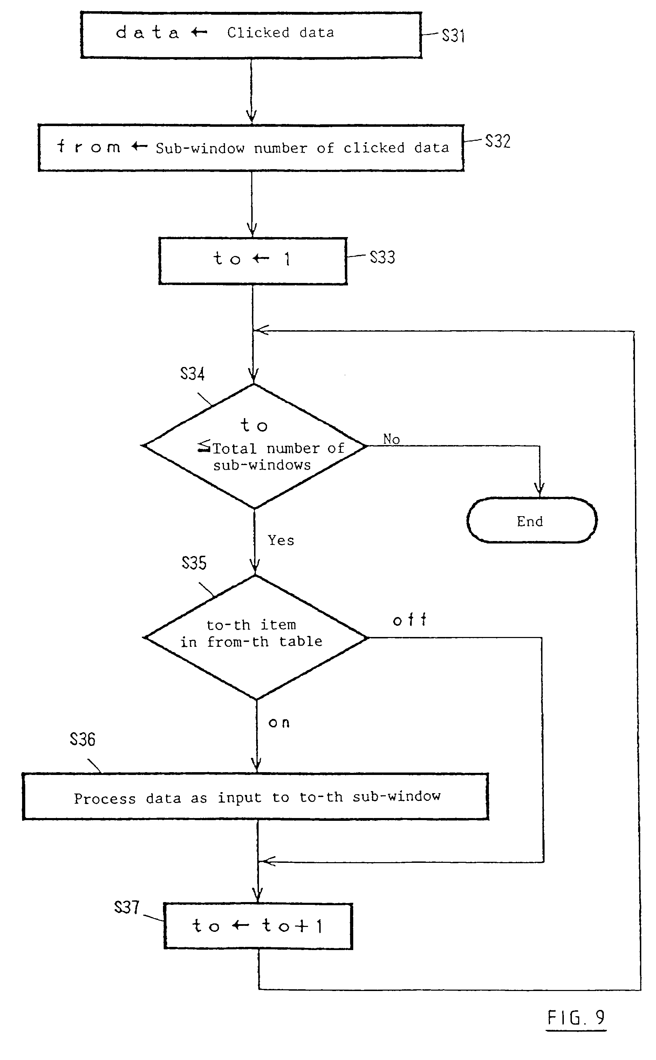

The automatic window processing is described below with reference to Figure 9. If data is clicked in a source window, the identifier of the clicked data is set in a "data" register (S31). Further, the number of the sub-window in which the clicked data is located is set in the "from" register (S32). And, each item in the "from"-th table is examined, and if its value is "on", the desired attribute (attribute to be displayed in the destination window) of the data specified in the "data" register is displayed in the corresponding sub-window or destination window (S34 to S37).

For instance, consider the example in Figure 2. In this case, as seen from the highlighting of the upper-right and lower-left buttons of the " 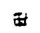 "-like buttons of the branch name list, relations have been set up in which the branch name list is the source and the upper-right annual sales graph window and the lower-left employee name list window are the destinations. And, the management table associated with this is as shown in Table 1 of Figure 5.

If "Hakozaki" in the branch name list is clicked at this point, the identifier of "Hakozaki" is stored in the "data" register, and the window number of the upper-left branch name list window is stored in the "from" register. Then, the table of the values in the "from" register, that is, those in Table 1 (corresponding to Window 1) are examined. Since the values for items 1, 2, 3 and 4 in Table 1 are "off", "on", "on" and "off", respectively, first, the display attribute value of the second window, that is the upper-right annual sales graph, is extracted from the identifier of "Hakozaki" and displayed in the upper-right annual sales graph window. Similarly, the display of the third window, the lower-left employee name list, is also automatically updated and displayed.

Although an example of four windows has been shown in the above description, this invention can generally be applied to two or more windows. Further, it can be expected that this application can be widely applied to program browsers or multimedia browsers having a plurality of windows. In addition, this invention can also be applied to overlapping windows, rather than a plurality of windows which are generated in the shape of tiles without overlapping each other. In this case, instead of the graphical objects symbolizing a two-dimensional window arrangement, the setting and displaying of the relations between windows may be provided by three-dimensional graphical objects that also display the state of overlapping. The relations between windows may also be various relations other in addition to the data take-out and take-in relations described above. For instance, they may include a relation in which the line positions and row positions of a list or text are linked.

## Claims

1. A computer workstation (1) including display means (6) and a window management system (3) comprising:
means for displaying a plurality of windows on said display means;
means for specifying the relations between said displayed windows; and
means for displaying graphical objects representing the specified relations between said windows on the display means,
and characterised in that one of said graphical objects is displayed in or adjacent each of said windows, wherein each of said graphical objects comprises a plurality of button representations corresponding respectively to one each of said plurality of windows.

2. A computer workstation as claimed in claim 1, further comprising:
means for operating on said graphical objects in order to specify the relations between said windows on the display means; and
means for changing the display mode of said graphical objects according to the specified relations between said windows.

3. A computer workstation as claimed in any preceding claim, wherein said plurality of windows are displayed in a fixed arrangement without overlapping each other.

4. A computer workstation as claimed in any preceding claim, wherein said plurality of button representations have the same positional arrangement as said plurality of windows.

5. A computer workstation as claimed in claim 4, wherein one of said button representations is operated to specify a relationship between a first window, being the window in or adjacent to which the graphical object containing said one button representation is located, and a second window, being the window having the same position within the positional arrangement of said plurality of windows as said one button representation has within the plurality of button representations.

6. A computer workstation as claimed in any preceding claim, further comprising a database system having: means for storing information;
means for setting views for controlling how said information is to be displayed within any particular window;
means for displaying said information within said plurality of windows according to said views; and
means for operating on said graphical objects to set up a master-slave relation between said two windows, wherein following selection in the master window of particular data from the stored information, the slave window is correspondingly changed to display a view of the selected data.

7. A method for managing windows in a computer workstation (1) including display means (6), the method having the steps of:
displaying a plurality of windows on said display means;
specifying the relations between said displayed windows; and
displaying graphical objects representing the specified relations between said windows on the display means,
and characterised in that one of said graphical objects is displayed in or adjacent each of said windows, wherein each of said graphical objects comprises a plurality of button representations corresponding respectively to one each of said plurality of windows.

8. The method of claim 7, further having the steps of :
operating on said graphical objects in order to specify the relations between said windows on the display means; and
changing the display mode of said graphical objects according to the specified relations between said windows.

## Patentansprüche

1. Ein Computer-Terminal (1) mit einem Anzeigemittel (6) und einem Fenster-Verwaltungssystem (3), das folgendes umfaßt:
ein Mittel zur Anzeige einer Mehrzahl an Fenstern auf dem genannten Anzeigemittel;
ein Mittel zur Spezifizierung der Beziehungen zwischen den genannten angezeigten Fenstern; und
ein Mittel zur Anzeige grafischer Objekte, die die spezifizierten Beziehungen zwischen den genannten Fenstern auf dem Anzeigemittel darstellen,
sowie dadurch charakterisiert, daß eines der genannten grafischen Objekte in oder neben jedem der genannten Fenster angezeigt wird, wobei jedes der genannten grafischen Objekte eine Mehrzahl an Schaltflächen-Darstellungen umfaßt, von denen jede einem der genannten Mehrzahl an Fenstern entspricht.

2. Ein Computer-Terminal gemäß Anspruch 1, das weiterhin folgendes umfaßt:
ein Mittel zur Bearbeitung der genannten grafischen Objekte, um die Beziehungen zwischen den genannten Fenstern auf dem Anzeigemittel zu spezifizieren; und
ein Mittel zur Änderung des Anzeigemodus der genannten grafischen Objekte in Übereinstimmung mit den spezifizierten Beziehungen zwischen den genannten Fenstern.

3. Ein Computer-Terminal gemäß den bisherigen Ansprüchen, wobei die genannte Mehrzahl an Fenstern in einer festen Anordnung angezeigt wird, wobei sich die Fenster nicht gegenseitig überlappen.

4. Ein Computer-Terminal gemäß den bisherigen Ansprüchen, wobei die genannte Mehrzahl an Schaltflächen-Darstellungen dieselben Positionsaordnungen wie die genannte Mehrzahl an Fenstern hat.

5. Ein Computer-Terminal gemäß Anspruch 4, wobei eine der genannten Schaltflächen-Darstellungen aktiviert wird, um eine Beziehung zwischen einem ersten Fenster, welches das Fenster ist, in dem oder nebem dem sich das grafische Objekt, das die genannte eine Schaltflächen-Darstellung enthält, befindet, und einem zweiten Fenster, welches das Fenster ist, das dieselbe Position innerhalb der Positionsanordnung der genannten Mehrzahl an Fenstern hat wie die genannte eine Schaltflächen-Darstellung innerhalb der Mehrzahl von Schaltflächen-Darstellungen, zu spezifizieren.

6. Ein Computer-Terminal gemäß den bisherigen Ansprüchen, das weiterhin ein Datenbanksystem umfaßt, das mit folgenden Komponenten ausgestattet ist:
einem Mittel zur Speicherung von Daten;
einem Mittel zur Einstellung von Ansichten, mit dem festgelegt wird, wie die genannten Daten innerhalb eines bestimmten Fensters angezeigt werden;
einem Mittel zur Anzeige der genannten Daten innerhalb der genannten Mehrzahl an Fenstern in Übereinstimmung mit den genannten Ansichten; und
einem Mittel zur Bearbeitung der genannten grafischen Objekte, um zwischen den genannten beiden Fenstern eine Master-Slave-Beziehung einzurichten, wobei nach der Auswahl bestimmter Daten aus den gespeicherten Informationen im Master-Fenster das Slave-Fenster entsprechend geändert wird, um eine Ansicht der ausgewählten Daten anzuzeigen.

7. Ein Verfahren zur Verwaltung von Fenstern in einem Computer-Terminal (1), das mit einem Anzeigemittel (6) ausgestattet ist, wobei dieses Verfahren die folgenden Schritte umfaßt:
Anzeige einer Mehrzahl von Fenstern im genannten Anzeigemittel;
Spezifizierung der Beziehungen zwischen den genannten angezeigten Fenstern; und
Anzeige der grafischen Objekte, die die spezifizierten Beziehungen zwischen den genannten Fenstern auf dem Anzeigemittel darstellen,
sowie dadurch charakterisiert, daß eines der genannten grafischen Objekte in oder neben jedem der genannten Fenster angezeigt wird, wobei jedes der genannten grafischen Objekte eine Mehrzahl an Schaltflächen-Darstellungen umfaßt, von denen jede einem der genannten Mehrzahl an Fenstern entspricht.

8. Das Verfahren gemäß Anspruch 7, das weiterhin die folgenden Schritte umfaßt:
Bearbeitung der genannten grafischen Objekte, um die Beziehungen zwischen den genannten Fenstern auf dem Anzeigemittel zu spezifizieren; und
Änderung des Anzeigemodus der genannten grafischen Objekte in Übereinstimmung mit den spezifizierten Beziehungen zwischen den genannten Fenstern.

## Revendications

1. Un poste de travail pour ordinateur (1) comprenant des moyens d'affichage (6) et un système de gestion de fenêtre (3) comprenant :
des moyens pour afficher une pluralité de fenêtres sur lesdits moyens d'affichage;
des moyens pour spécifier les relations intervenant entre lesdites fenêtres affichées; et
des moyens pour afficher des objets graphiques représentant les relations spécifiées intervenant entre lesdites fenêtres sur les moyens d'affichage,
est caractérisé en ce que l'un desdits objets graphiques est affiché dans ou de façon adjacente à chacune desdites fenêtres, dans lequel chacun desdits objets graphiques comprend une pluralité de représentations en boutons correspondant respectivement à chacune parmi ladite pluralité de fenêtres.

2. Un poste de travail pour ordinateur selon la revendication 1, comprenant en outre :
des moyens pour opérer sur lesdits objets graphiques de manière à spécifier les relations intervenant entre lesdites fenêtres sur les moyens d'affichage; et
des moyens pour modifier le mode d'affichage desdits objets graphiques, en fonction des relations spécifiées intervenant entre lesdites fenêtres.

3. Un poste de travail pour ordinateur selon l'une quelconque des revendications precédentes, dans lequel ladite pluralité de fenêtres sont affichées selon un agencement fixé, sans chevauchement les unes entre les autres.

4. Un poste de travail pour ordinateur selon l'une quelconque des revendications précédentes, dans lequel ladite pluralité de représentations en boutons ont le même agencement de position que ladite pluralité de fenêtres.

5. Un poste de travail pour ordinateur selon la revendication 4, dans lequel l'une desdites représentations en boutons est exploitée pour spécifier une relation intervenant entre une première fenêtre, qui est la fenêtre se trouvant dans laquelle, ou en position adjacente à laquelle, l'objet graphique contenant ladite une représentation en boutons est situé, et une deuxième fenêtre, qui est la fenêtre ayant la même position, dans l'agencement de position de ladite pluralité de fenêtre, que ladite une représentation en boutons a, dans la pluralité des représentations en boutons.

6. Un poste de travail pour ordinateur selon l'une quelconque des revendications précédentes comprenant en outre un système à base de données ayant :
des moyens pour stocker de l'information;
des moyens pour fixer des vues destinées à contrôler de quelle façon ladite information doit être affichée dans une fenêtre particulière quelconque;
des moyens pour afficher ladite information dans ladite pluralité de fenêtres en fonction desdites vues; et
des moyens pour opérer sur lesdits objets graphiques, afin de fixer une relation maître-esclave entre lesdites deux fenêtres, dans lequel, suite à la sélection dans la fenêtre maître de données particulières à partir de l'information stockée, la fenêtre esclave est modifiée de manière correspondante afin d'afficher une vue des données sélectionnée.

7. Un procédé de gestion de fenêtres dans un poste de travail pour ordinateur (1), comprenant des moyens d'affichage (6), le procédé comprenant les étapes consistant à :
afficher une pluralité de fenêtres sur lesdits moyens d'affichage;
spécifier les relations intervenant entre lesdites fenêtres affichées; et
afficher des objets graphiques représentant les relations spécifiées intervenant entre lesdites fenêtres sur les moyens d'affichage,
et caractérisé en ce que l'un desdits objets graphiques est affiché dans ou de façon adjacente à chacune desdites fenêtres, dans lequel chacun desdits objets graphiques comprend une pluralité de représentations en boutons, correspondant respectivement à chacune parmi ladite pluralité de fenêtres.

8. Le procédé selon la revendication 7, comprenant en outre les étapes consistant à :
effectuer sur lesdits objets graphiques une exploitation pour spécifier les relations intervenant entre lesdites fenêtres sur les moyens d'affichage; et
modifier le mode d'affichage desdits objects graphiques en fonction des relations spécifiées intervenant entre lesdites fenêtres.
